# EUROPEAN PATENT APPLICATION

(11) **EP 4 550 553 A1**
(43) Date of publication of application: **07.05.2025**
(21) Application number: 23842194.5
(22) Date of filing: 13.07.2023
(51) Int. Cl.: H01M 50/30

(54) **BOTTOM SUPPORT PLATE, BATTERY CELL, BATTERY PACK, AND ELECTRIC DEVICE**

(30) Priority: 18.07.2022 CN 202221835391 U
(71) Applicant: Contemporary Amperex Technology Co., Limited, Ningde, Fujian 352100 (CN)
(72) Inventor: KE, Haibo, Ningde, Fujian 352100 (CN); LI, Quankun, Ningde, Fujian 352100 (CN); MEI, Xiang, Ningde, Fujian 352100 (CN); YANG, Kaihuan, Ningde, Fujian 352100 (CN); HUANG, Shoujun, Ningde, Fujian 352100 (CN); WANG, Peng, Ningde, Fujian 352100 (CN)
(74) Representative: Gong, Jinping
(86) International application number: PCT/CN2023/107217
(87) International publication number: WO 2024/017130

(57) **Abstract**

The present application discloses a bottom support plate, a battery cell, a battery pack, and an electrical apparatus. A bottom support plate of the present application is configured to support an electrode assembly in a battery cell. The bottom support plate comprises: a bottom support plate body; a connecting plate, wherein the connecting plate is arranged on the lower surface of the bottom support plate body, and an exhaust groove is formed between an edge of the connecting plate and the lower surface of the bottom support plate body, the exhaust groove runs through the peripheral edge of the bottom support plate body at least along a first direction and a second direction, the first direction and the second direction are both perpendicular to the thickness direction of the bottom support plate body, and the exhaust groove is configured to communicate with a gap between a shell and an insulating sleeve film of the battery cell. The exhaust groove of the present application runs through the peripheral edge of the bottom support plate body. When the electrode assembly thermally runs away, the gas around the electrode assembly can discharge in time through the exhaust groove, thereby avoiding the risk of battery explosion due to accumulation and failing to discharge in time of the gas locally generated in the electrode assembly.

## Description

### CROSS-REFERENCE TO RELATED APPLICATIONS

The present application claims priority to Chinese Patent Application No. 202221835391.5 filed on July 18, 2022 and entitled "BOTTOM SUPPORT PLATE, BATTERY CELL, BATTERY PACK, AND ELECTRICAL APPARATUS," which is incorporated herein by reference in its entirety.

### TECHNICAL FIELD

The present application relates to the technical field of batteries, and specifically to a bottom support plate, a battery cell, a battery pack, and an electrical apparatus.

### BACKGROUND

In existing battery technology, a bottom support plate is disposed at the bottom of the case of a battery cell to support the electrode assembly of the battery cell. The bottom support plate seals the bottom of the electrode assembly of the battery cell. When the electrode assembly thermally runs away, the generated gas accumulates in the case of the battery cell and cannot discharge in time, which can easily cause the battery to explode.

### SUMMARY OF THE INVENTION

In view of the above problem, the present application provides a bottom support plate, a battery cell, a battery pack, and an electrical apparatus. The high-temperature gas generated by the electrode assembly can be quickly discharged through the exhaust groove, thereby improving the safety of the battery cell during use.

In a first aspect, the present application provides a bottom support plate for supporting an electrode assembly in a battery cell, and the bottom support plate comprises:
a bottom support plate body; and
a connecting plate, wherein the connecting plate is arranged on the lower surface of the bottom support plate body, and an exhaust groove is formed between the edge of the connecting plate and the lower surface of the bottom support plate body, the exhaust groove runs through the peripheral edge of the bottom support plate body at least along a first direction and a second direction, the first direction and the second direction are both perpendicular to the thickness direction of the bottom support plate body, and the exhaust groove is configured to communicate with a gap between a shell and an insulating sleeve film of the battery cell.

In the technical solution of the embodiment of the present application, the exhaust groove runs through the peripheral edge of the bottom support plate body. When the electrode assembly thermally runs away, the gas around the electrode assembly can discharge in time through the exhaust groove, thereby avoiding the risk of battery explosion due to accumulation and failing to discharge in time of the gas locally generated in the electrode assembly. At the same time, the bottom support plate body and the connecting plate are combined to form a groove, which is more convenient for manufacturing and does not require machining the groove by mechanical cutting, thereby simplifying the manufacturing process and lowering manufacturing costs.

In some embodiments, the number of the connecting plates is at least 1, and a varying number of connecting plates can be provided according to the shape of the exhaust groove to increase the flexibility of the design.

In some embodiments, there are four connecting plates, and the four connecting plates are arranged in a square matrix at intervals on the lower surface of the bottom support plate body. The four connecting plates form a cross groove structure, which can better guide the gas out.

In some embodiments, the connecting plate and/or the bottom support plate body are a plastic plate. It is easy to bond and can also prevent internal short circuits inside the battery cells. If metal materials are used, metal debris is easily generated, which may cause the risk of internal short circuits inside the battery.

In some embodiments, the connecting plate is welded or bonded to the bottom support plate body. The above method can avoid processing difficulties caused by mechanical cutting, and is more conducive to simplifying the manufacturing process and reducing manufacturing costs.

In some embodiments, the narrowest width of the exhaust groove ranges from 10 mm to 100 mm. It is more convenient for the gas generated when the electrode assembly thermally runs away to overflow from the electrode assembly to the exhaust groove and discharge quickly. If the channel is too narrow, the gas generated during thermal runaway of the electrode assembly may accumulate and cannot discharge in time. If the channel is too large, it is not conducive to supporting the electrode assembly.

In some embodiments, a through hole is provided on the bottom support plate body, and the through hole runs through the upper surface and the lower surface of the bottom support plate along the thickness direction of the bottom support plate body. The through hole is configured to position when the bottom support plate body is installed to ensure the accuracy of the installation of the bottom support plate body.

In a second aspect, the present application provides a battery cell, comprising:
an insulating sleeve film, provided with an accommodating space for accommodating the electrode assembly of the battery cell;
the bottom support plate of the first aspect, serving as the bottom wall of the insulating sleeve film, and/or the bottom of the insulating sleeve film being provided with the bottom support plate.

In the technical solution of the embodiment of the present application, a plate can be arranged on the lower surface of the bottom of the insulating sleeve film to form an exhaust groove, that is, the bottom wall of the insulating sleeve film serves as the bottom support plate body. Alternatively, the bottom support plate body can be arranged on the lower surface of the bottom of the insulating sleeve film, and a plate is arranged on the lower surface of the bottom support plate body to form an exhaust groove. The above-mentioned two connection methods can both discharge the gas overflowing from the insulating sleeve film when the electrode assembly thermally runs away through the exhaust groove at the bottom.

In some embodiments, it comprises a shell. An accommodating cavity is provided inside the shell, an insulating sleeve film accommodating an electrode assembly is provided in the accommodating cavity. An exhaust groove is provided toward the bottom of the accommodating cavity to form an exhaust channel; wherein an exhaust outlet communicating with the exhaust channel is provided at the bottom of the shell, and an explosion-proof valve is provided at the exhaust outlet. The exhaust groove and the upper surface of the bottom of the shell form an exhaust channel to facilitate the discharge of gas from the shell to prevent the risk of explosion when the electrode assembly thermally runs away.

In some embodiments, along the thickness direction of the bottom support plate body, the projection of the exhaust outlet on the bottom support plate is located within the exhaust groove. The gas in the exhaust groove can discharge from the exhaust outlet to the maximum extent.

In some embodiments, the ratio of the total thickness of the bottom support plate to the height of the shell ranges from 1:50 to 1:2000. The bottom support plate can be made thinner and the height of the shell can be increased to improve the capacity of the battery cell.

In some embodiments, a positioning hole corresponding to the through hole of the bottom support plate is provided at the bottom of the insulating sleeve film, and the positioning hole runs through the bottom wall of the insulating sleeve film. The positioning holes can ensure the accuracy of installation of the bottom support plate and the insulating sleeve film.

In a third aspect, the present application provides a battery pack, which comprises the battery cell of the second aspect.

In a fourth aspect, the present application provides an electrical apparatus, comprising the battery cell of the second aspect, the battery cell being configured to provide electrical energy; or comprising the battery pack of the third aspect, the battery pack being configured to provide electrical energy.

The above description is only an overview of the technical solution of the present application. In order to better understand the technical means of the present application and thus implement them according to the contents of the specification, and in order to make the above and other objectives, features and advantages of the present application more obvious and understandable, the following is the detailed description of the present application.

### BRIEF DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the accompanying drawings:
FIG. 1 is a schematic diagram of an electrical apparatus as a vehicle according to an embodiment of the present application;
FIG. 2 is a schematic exploded structural diagram of a battery pack according to some embodiments of the present application;
FIG. 3 is a schematic exploded structural diagram of a battery cell according to some embodiments of the present application;
FIG. 4 is a schematic exploded structural diagram of a bottom support plate according to some embodiments of the present application;
FIG. 5 is a bottom view of the bottom support plate of FIG. 4;
FIG. 6 is a side view of the bottom support plate of FIG. 4;
FIG. 7 is a bottom view of a bottom support plate according to some embodiments of the present application;
FIG. 8 is a side view of the bottom support plate of FIG. 7;
FIG. 9 is a bottom view of a bottom support plate according to some embodiments of the present application;
FIG. 10 is a bottom view showing that there is an exhaust groove at the bottom of an insulating sleeve film on a bottom support plate according to some embodiments of the present application, in which the insulating sleeve film is in an unfolded state;
FIG. 11 is a schematic exploded structural diagram of a battery cell according to some embodiments of the present application;
FIG. 12 is a plan view showing the projection of an exhaust outlet on a shell of a battery cell on a bottom support plate according to some embodiments of the present application.

Reference numerals in Detailed Description are as follows:
Vehicle 1000;
Battery pack 100;
Battery pack shell 10, lower box 11, upper cover 12;
Battery cell 20, end cover 21, electrode terminal 21a, shell 22, exhaust outlet 22a, electrode assembly 23, tab 23a, insulating sleeve film 24, bottom support plate 25, bottom support plate body 251, connecting plate 252, exhaust groove 253, through hole 254, first direction a, second direction b;
Controller 200;
Motor 300.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting," "connection," "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

The bottom support plate between the insulating sleeve film inside the shell of the battery cell and the bottom of the shell abuts the bottom of the shell, and the explosion-proof valve is arranged at the exhaust port at the bottom of the shell. After thermal runaway of the electrode assembly, gas will overflow from the insulating sleeve film into the gap between the insulating sleeve film and the shell. The bottom support plate abuts the bottom of the shell, which will make the explosion-proof valve unable to discharge the gas in time, leading to the risk of explosion of the electrode assembly.

In order to solve the above problems, an exhaust groove can be arranged between the bottom of the insulating sleeve film and the upper surface of the bottom of the shell, and the gas around the insulating sleeve film is introduced into the exhaust groove and discharged from the exhaust groove to the exhaust port. The gas generated by the thermal runaway of the electrode assembly can discharge in time, avoiding the risk of explosion of the electrode assembly due to the failure to discharge the gas when the electrode assembly thermally runs away.

An embodiment of the present application provides an electrical apparatus. The electrical apparatus comprises a battery cell or a battery pack, and the battery cell or battery pack provides electric energy to the electrical apparatus. The electrical apparatus may be, but is not limited to, a mobile phone, a tablet, a laptop, an electric toy, an electric tool, a battery vehicle, an electric vehicle, a ship, a spacecraft, and the like. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

For the convenience of description in the following embodiments, an electrical apparatus being a vehicle 1000 according to an embodiment of the present application is taken as an example for the description.

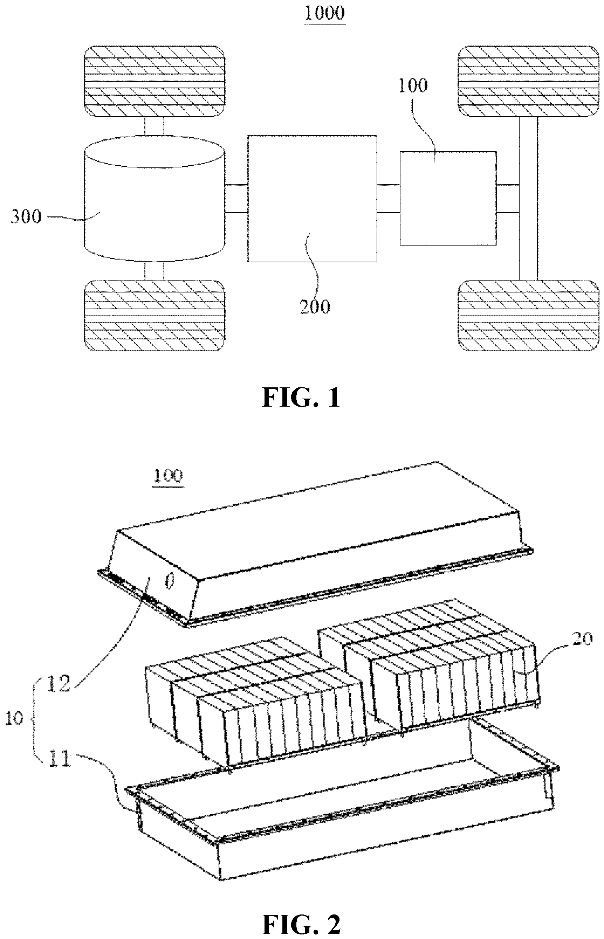

Referring to FIG. 1, FIG. 1 is a schematic structural diagram of a vehicle 1000 provided in some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery pack 100 is arranged in the vehicle 1000. The battery pack 100 may be arranged at the bottom or head or tail of the vehicle 1000. The battery pack 100 may be used as a power supply for the vehicle 1000, for example, the battery pack 100 may be used as an operating power source for the vehicle 1000. The vehicle 1000 may further include a controller 200 and a motor 300. The controller 200 is configured to control the battery pack 100 to supply power to the motor 300, for example, to supply power for starting, navigation and driving of the vehicle 1000.

In some embodiments of the present application, the battery pack 100 may not only be used as the operating power source for the vehicle 1000, but also as a driving power source for the vehicle 1000, to replace or partially replace fuel or natural gas to provide driving power for the vehicle 1000.

Referring to FIG. 2, FIG. 2 is an exploded view of a battery pack 100 provided in some embodiments of the present application. The battery pack 100 comprises a battery pack shell 10 and at least one battery cell 20, and the battery cell 20 is accommodated in the battery pack shell 10. The battery pack shell 10 is configured to provide an accommodating space for the battery cell 20, and the battery pack shell 10 can be of various structures. In some embodiments, the battery pack shell 10 may comprise a lower box 11 and an upper cover 12, the lower box 11 and the upper cover 12 cover each other, and the lower box 11 and the upper cover 12 together define an accommodating space for accommodating the battery cells 20. The upper cover 12 can be of a hollow structure with an inlet at one end, and the lower box 11 can be of a plate structure, and the lower box 11 covers the inlet side of the upper cover 12, so that the lower box 11 and the upper cover 12 jointly define an accommodating space; the lower box 11 and the upper cover 12 may also both be of a hollow structure with an inlet at one side, and the inlet side of the lower box 11 covers the inlet side of the upper cover 12. Of course, the lower box 11 formed by the lower box 11 and the upper cover 12 may be in various shapes, such as a T-shape or a cuboid.

In the battery pack 100, there may be a plurality of battery cells 20, and the plurality of battery cells 20 can be connected in series or in parallel or in a mixed connection, where the mixed connection means that the plurality of battery cells 20 are connected in both series and parallel. The plurality of battery cells 20 can be directly connected together in series or in parallel or in mixed connection, and then the whole composed of the plurality of battery cells 20 can be accommodated in the lower box 11; and of course, the battery pack 100 may also be in the form of a battery module first formed by the plurality of battery cells 20 being connected in series or in parallel or in mixed connection, then multiple battery modules can be connected in series or in parallel or in mixed connection to form a whole, and accommodated in the lower box 11. The battery 100 pack may further comprise other structures, for example, the battery pack 100 may further include a bus component for realizing electrical connections between the plurality of battery cells 20.

Each battery cell 20 may be a secondary battery or a primary battery; or it may be a lithium-sulfur battery, a sodium-ion battery or a magnesium-ion battery, but is not limited thereto. The battery cell 20 may be in the shape of a cylinder, a flat body, a cuboid or others.

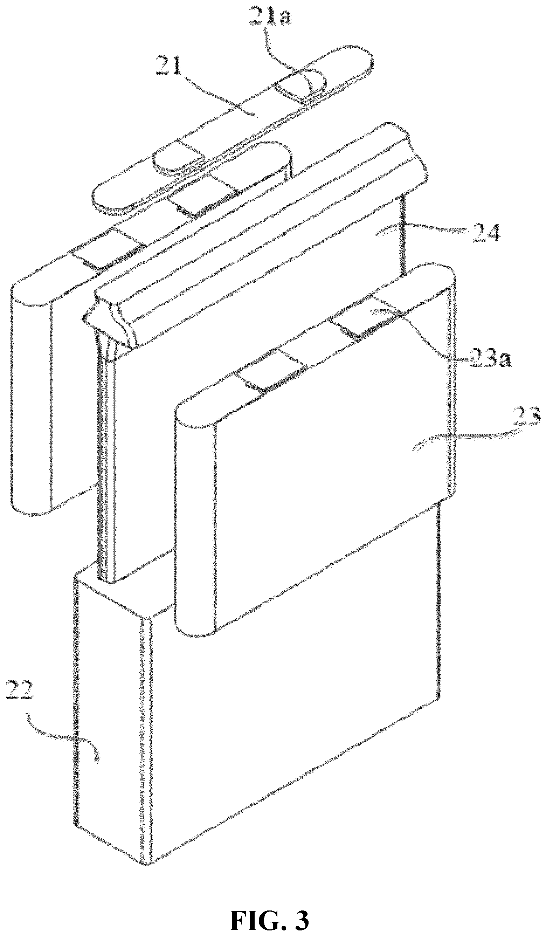

Referring to FIG. 3, and FIG. 3 is a schematic exploded structural diagram of a battery cell 20 provided by some embodiments of the present application. The battery cell 20 refers to the smallest unit constituting a battery pack. As shown in FIG. 3, the battery cell 20 includes an end cover 21, a shell 22, an electrode assembly 23 and other functional components.

The end cover 21 is a component that covers the inlet of the shell 22 to isolate the internal environment of the battery cell 20 from the external environment. Without limitation, the shape of the end cover 21 may be adaptive to the shape of the shell 22 so as to be matched with the shell 22. Optionally, the end cover 21 may be made of a material (such as an aluminum alloy) with a certain hardness and strength, so that the end cover 21 is not susceptible to deformation when being pressed and collided, the battery cell 20 can have a higher structural strength, and the safety performance can also be improved. Functional components such as electrode terminals 21a may be arranged on the end cover 21. The electrode terminals 21a can be configured to electrically connected to the electrode assembly 23 for use in outputting or inputting electrical energy from or to the battery cell 20. In some embodiments, the end cover 21 may be further provided with a pressure relief mechanism configured to relieve internal pressure when the internal pressure or temperature of the battery cell 20 reaches a threshold. The end cover 21 may be made of various materials, such as copper, iron, aluminum, stainless steel, an aluminum alloy, and plastic. This is not specially limited in the embodiments of the present application. In some embodiments, an insulating member may be further arranged on an inner side of the end cover 21 and may be configured to isolate an electrical connection component in the shell 22 from the end cover 21, thereby reducing the risk of short circuit. As an example, the insulating member may be made of plastic, rubber, etc.

The shell 22 is an assembly for matching the end cover 21 to form the internal environment of the battery cell 20. The formed internal environment may be configured to accommodate the electrode assembly 23, an electrolytic solution and other components. The shell 22 and the end cover 21 may be separate components, an inlet may be provided on the shell 22, and at the inlet, the inlet is covered with the end cover 21 so as to form the internal environment of the battery cell 20. Without limitation, the end cover 21 and the shell 22 may also be integrated. Specifically, the end cover 21 and the shell 22 may form a common connection surface before other components enter the shell. When the interior of the shell 22 is required to be encapsulated, the shell 22 is covered with the end cover 21. The shell 22 may be of various shapes and sizes, such as a rectangular solid, a cylinder and a hexagonal prism. Specifically, the shape of the shell 22 may be determined according to the specific shape and size of the electrode assembly 23. The shell 22 may be made of various materials, such as copper, iron, aluminum, stainless steel, an aluminum alloy and plastic, which is not particularly limited in the embodiment of the present application.

The electrode assembly 23 is a component in which an electrochemical reaction occurs in the battery cell 20. One or more electrode assemblies 23 may be contained within the shell 22. The electrode assembly 23 is mainly formed by winding or stacking a positive electrode plate and a negative electrode plate, and a separator is usually arranged between the positive electrode plate and the negative electrode plate. The portions, with active materials, of the positive electrode plate and the negative electrode plate constitute a main body part of the electrode assembly, and the portions, without the active materials, of the positive electrode plate and the negative electrode plate respectively constitute tabs 23a. The positive tab and the negative tab may be located at one end of the main body part together or located at two ends of the main body part respectively. In the charging and discharging process of the battery, the positive electrode active material and the negative electrode active material react with the electrolyte, and the tabs 23a are connected to the electrode terminals to form a current loop.

For ease of description, the following embodiments are illustrated by taking a bottom support plate in an embodiment of the present application as an example.

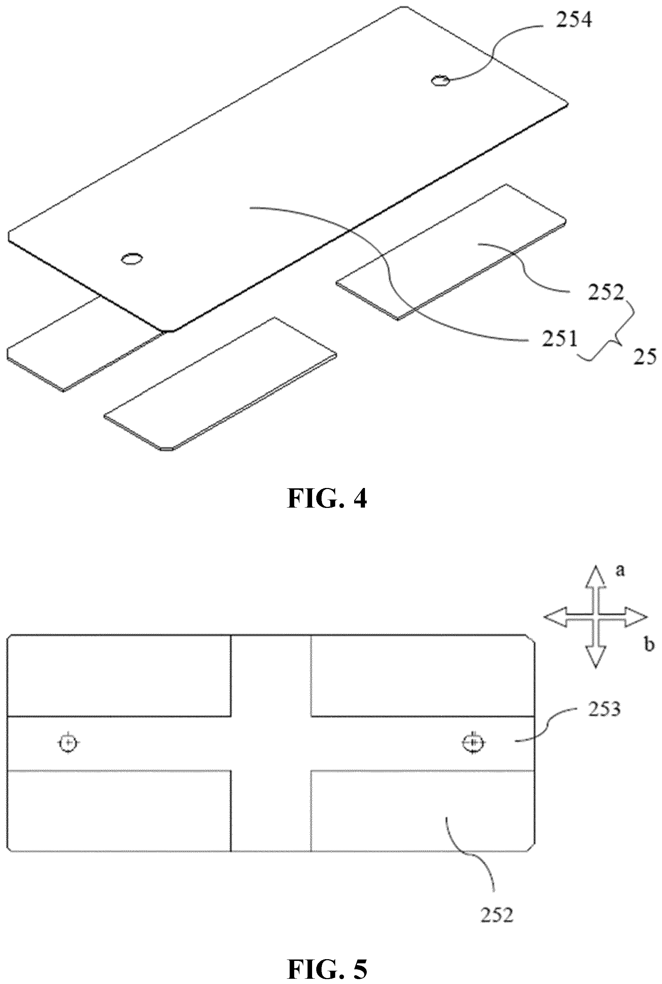

Referring to FIGS. 4 and 5, FIG. 4 is a schematic exploded structural diagram of a bottom support plate 25 according to some embodiments of the present application, and FIG. 5 is a bottom view of FIG. 4. The bottom support plate 25 is configured to support the electrode assembly in the battery cell. The bottom support plate 25 comprises a bottom support plate body 251 and a connecting plate 252. The connecting plate 252 is arranged on the lower surface of the bottom support plate body 251, and an exhaust groove 253 is formed between the edge of the connecting plate 252 and the lower surface of the bottom support plate body 251. The exhaust groove 253 runs through the peripheral edge of the bottom support plate body 251 at least along a first direction and a second direction b, the first direction and the second direction b are both perpendicular to the thickness direction of the bottom support plate body 251, and the exhaust groove is configured to communicate with a gap between a shell and an insulating sleeve film of the battery cell.

The first direction a refers to the direction of extended lines on both sides of any straight line perpendicular to in the thickness direction the bottom support plate body 251. The second direction b refers to the direction of extended lines on both sides of any straight line perpendicular to the thickness direction of the bottom support plate body 251, and the angle between the first direction and the second direction b is greater than 0° and less than or equal to 90°. As shown in FIG. 4, the first direction and the second direction b are perpendicular to each other in FIG. 4. Of course, the angle between the first direction and the second direction b may also be an acute angle.

The lower surface of the bottom support plate body 251 refers to a side surface facing the upper surface of the bottom of the shell 22 of the battery cell.

It is understandable that a portion of the exhaust groove 253 may run through the bottom support plate body 251 along the thickness direction of the bottom support plate body 251, or the exhaust groove 253 as a whole may not run through the bottom support plate body 251 at all along the thickness direction of the bottom support plate body 251, which is not specifically limited here.

The exhaust groove 253 runs through the peripheral edge of the bottom support plate body 251, which means that the exhaust groove 253 runs through the bottom support plate body 251 and passes through the edge of any side of the bottom support plate body 251, that is, the gas can enter the exhaust groove 253 from the edge of any side of the bottom support plate body 251. When the electrode assembly is thermally runs away, gas can enter the exhaust groove 253 from the edge of any side of the bottom support plate body 251 and discharge through the exhaust groove 253, thereby preventing the risk of battery explosion due to accumulation and failing to discharge in time of the gas locally generated in the electrode assembly.

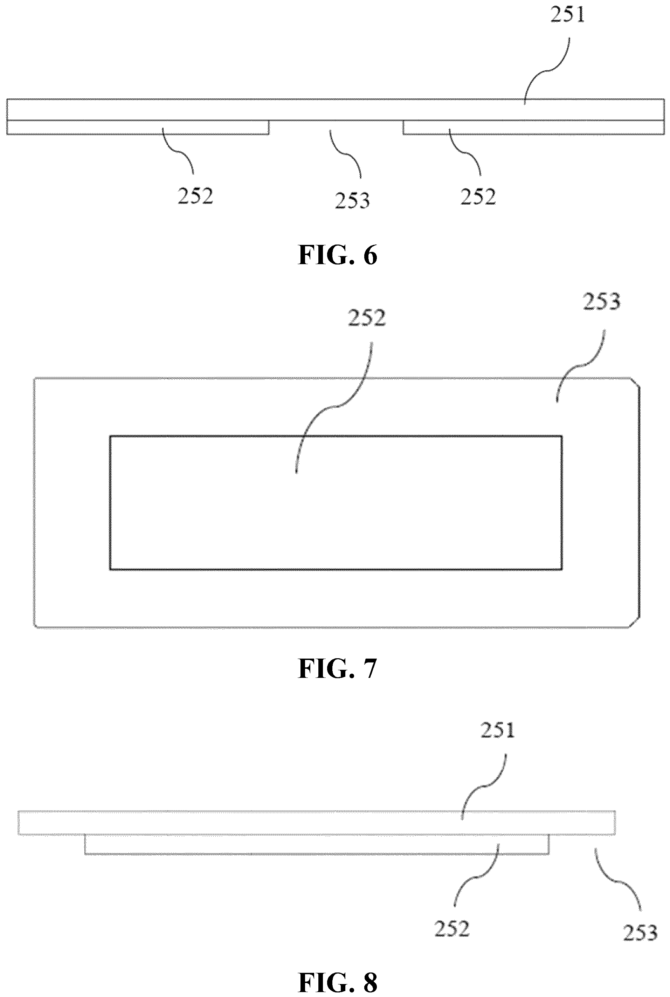

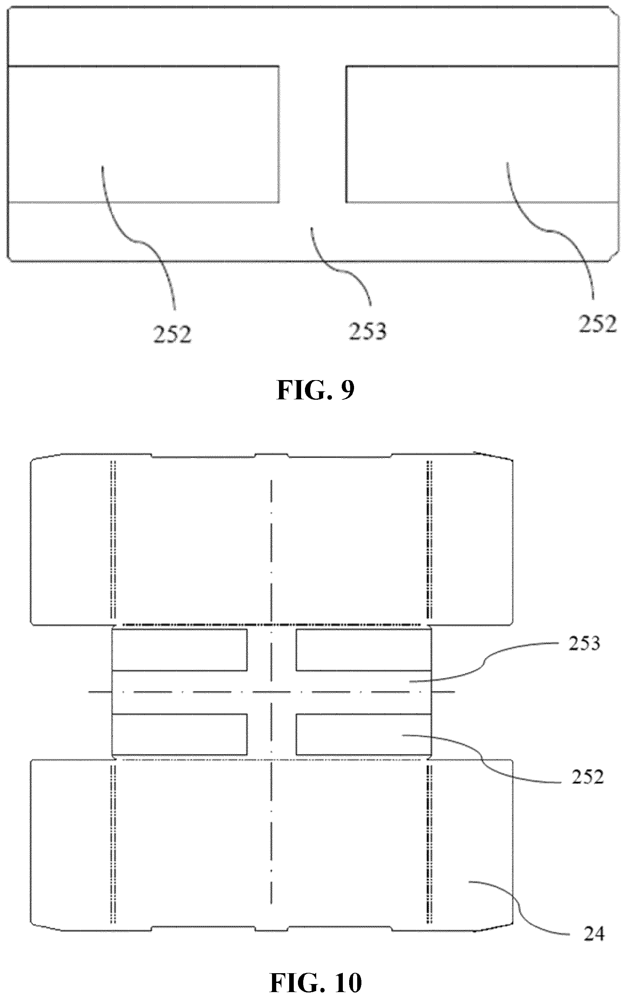

According to an embodiment of the present application, referring to FIGS. 4 to 9, FIG. 4 is an axonometric view of a bottom support plate according to some embodiments of the present application, FIG. 5 is a bottom view of the bottom support plate of FIG. 4, FIG. 6 is a side view of the bottom support plate of FIG. 4, FIG. 7 is a bottom view of a bottom support plate according to some embodiments of the present application, FIG. 8 is a side view of the bottom support plate of FIG. 7, and FIG. 9 is a bottom view of a bottom support plate according to some embodiments of the present application. According to an embodiment of the present application, the number of the connecting plates 252 is at least 1.

As the number of connecting plates 252 varies, exhaust grooves of different shapes can be formed. Along the thickness direction of the bottom support plate body 251, the projection of the exhaust groove 253 on the bottom support plate body 251 may be, but not limited to, of a cross shape, a ring shape, a " 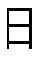 " shape, a " 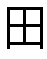 " shape, a " 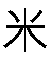 " shape or an H shape.

As shown in FIG. 4 to FIG. 6, the projection of the exhaust groove 253 on the bottom support plate body 251 is of a cross shape, and the number of the connecting plates 252 is 4. As shown in FIG. 7and FIG. 8, the projection of the exhaust groove 253 on the bottom support plate body 251 is of a ring shape, and the number of the connecting plates 252 is one. As shown in FIG. 9, the side view of FIG. 9 can refer to FIG. 6, which is the same as the side view of the bottom support plate in the embodiment of FIG. 5, and the projection of the exhaust groove 253 on the bottom support plate body 251 is H-shaped.

By providing different numbers of connecting plates 252, exhaust grooves 253 of different shapes can be provided to achieve exhaust of the bottom support plate, thereby solving the problem that the gas generated by thermal runaway of the electrode assembly cannot discharge in time.

According to an embodiment of the present application, the number of the connecting plates 252 may be four, and the four connecting plates are arranged in a square matrix at intervals on the lower surface of the bottom support plate body. The gas generated by thermal runaway of the electrode assembly can discharge more quickly.

According to an embodiment of the present application, the connecting plate 252 and/or the bottom support plate body 251 are insulating plastic plates.

The connecting plate 252 and/or the bottom support plate body 251 may be, but are not limited to, insulating plastic plates such as PP, PC, PFA, PPS, and PET.

During the installation and use of the battery cell, the connecting plate 252 and/or the bottom support plate body 251 are easily worn with the battery cell shell 22 to produce debris. When the connecting plate 252 and/or the bottom support plate body 251 are made of conductive materials, the generated debris is easy to cause a short circuit inside the battery cell. Therefore, the connecting plate 252 and/or the bottom support plate body 251 are configured as insulating plastic plates.

According to an embodiment of the present application, the connecting plate 252 is welded or bonded to the bottom support plate body 251.

The connection plate 252 is welded or bonded to the bottom support plate body 251, which means that all the connection plates 252 on the bottom support plate body 251 are welded or bonded to the bottom support plate body 251.

According to the shape of the exhaust groove 253, at least one connecting plate 252 can be welded to the bottom support plate body 251 by ultrasonic welding, or at least one connecting plate 252 can be welded to the bottom support plate body 251 by hot melt bonding.

The above methods can avoid the problem of difficult cutting processing, and at the same time simplifies the manufacturing process, increases manufacturing flexibility, and helps to reduce manufacturing costs.

According to an embodiment of the present application, the narrowest width of the exhaust groove ranges from 10 mm to 100 mm.

The narrowest width of the exhaust groove 253 refers to the width of the narrowest position of the exhaust groove 253 through which gas flows.

It is more convenient for the gas generated when the battery assembly thermally runs away to overflow from the electrode assembly 23 to the exhaust groove 253 and discharge quickly. If the channel is too narrow, the gas generated during thermal runaway of the electrode assembly 23 may accumulate and cannot discharge in time. If the channel is too large, it is not conducive to supporting the electrode assembly 23.

According to an embodiment of the present application, the total thickness of the bottom support plate body 251 and the connecting plate 252 ranges from 0.15 mm to 0.6 mm, and/or the thickness of the bottom support plate body 251 is 0.05 mm to 0.4 mm, and/or the thickness of the connecting plate 252 is 0.1 mm to 0.3 mm.

The bottom support plate 25 can be made thinner, and on the premise of the accommodating space of the battery is fixed, the height of the electrode assembly 23 can be increased to improve the capacity of the battery cell.

According to an embodiment of the present application, as shown in FIG. 4, a through hole 254 is provided on the bottom support plate body 251, and the through hole 254 runs through the upper surface and the lower surface of the bottom support plate body 251 along the thickness direction of the bottom support plate body 251.

The through hole 254 may be, but is not limited to, a circular hole, a square hole, or a polygonal hole.

The through hole 254 may be located in the exhaust groove 253 or on the connecting plate 252, which is not specifically limited in the present application.

The through hole 254 plays a role of positioning when the bottom support plate body 251 is installed, so as to ensure the accurate position of the bottom support plate body 251 in the battery cell. A round hole is better and more conductive to manufacturing and positioning.

During the installation of the bottom support plate 25 and the insulating sleeve film 24 of the battery cell, it is necessary to ensure that the positioning holes of the bottom support plate 25 and the insulating sleeve film 24 correspond to each other to ensure the accuracy of the installation positions of the bottom support plate body 251 and the connecting plate 252.

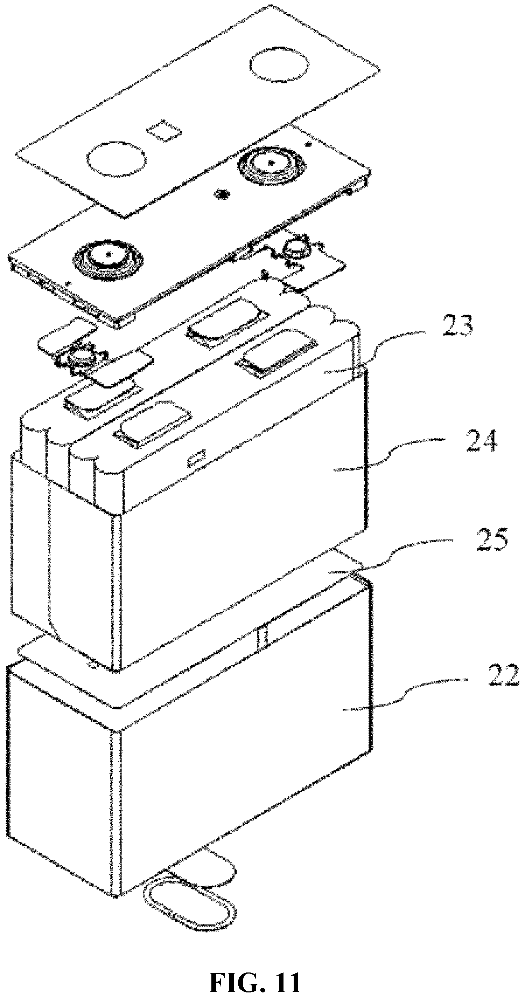

Please refer to FIG. 10, which is a bottom view showing that there is an exhaust groove 253 at the bottom the insulating sleeve film 24 on the bottom support plate 25 according to some embodiments of the present application. FIG. 11 is a schematic exploded structural diagram of a battery cell according to some embodiments of the present application. A battery cell 20 includes an insulating sleeve film 24 and a bottom support plate 25. The insulating sleeve film 24 is provided with an accommodating space for accommodating the electrode assembly 23 of the battery cell, and the bottom support plate 25 serves as the bottom wall of the insulating sleeve film 24, and/or the bottom of the insulating sleeve film 24 is provided with the bottom support plate 25.

The bottom support plate 25 can serve as the bottom wall of the insulating sleeve film 24, which means that the bottom support plate body 251 of the bottom support plate 25 serves as the bottom wall of the insulating sleeve film 24.

The bottom support plate 25 is provided at the bottom of the insulating sleeve film 24, which means that the bottom support plate body 251 and the connecting plate 252 are provided at the bottom of the insulating sleeve film 24.

The insulating sleeve film may be, but is not limited to, PP, PC, PFA, PPS, PET and other films. It is better if the insulating sleeve film and the bottom support plate are made of the same material to facilitate fixation.

The accommodating space formed by the insulating sleeve film 24 refers to the space occupied by the electrode assembly 23 on the insulating sleeve film 24 when the insulating sleeve film 24 is wrapped around the electrode assembly 23.

The bottom wall of the insulating sleeve film 24 refers to a thin plate structure on the insulating sleeve film 24 facing the bottom of the electrode assembly 23.

The bottom of the insulating sleeve film 24 itself can serve as the bottom support plate body 251, that is, the connecting plate 252 can be fixedly disposed on the bottom of the insulating sleeve film 24, and the connecting plate 252 and the lower surface of the bottom of the insulating sleeve film 24 form the exhaust groove 253. Alternatively, the bottom support plate body 251 may be used as a separate component, the bottom support plate body 251 is fixedly disposed at the bottom of the insulating sleeve film 24, and at least one connecting plate 252 is fixed on the lower surface of the bottom support plate body 251 to form the exhaust groove 253. The two connection methods can both discharge the gas overflowing from the insulating sleeve film 24 when the electrode assembly 23 thermally runs away through the exhaust groove 253 at the bottom, which increases the flexibility of installation.

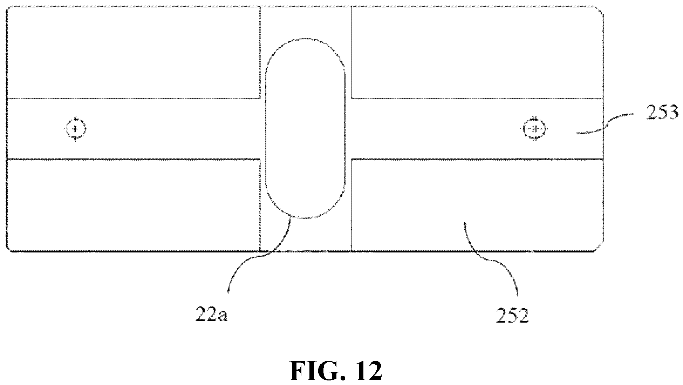

In an embodiment according to the present application, as shown in FIGS. 11 and 12, the battery cell 20 further comprises a shell 22 and an explosion-proof valve. An accommodating cavity is provided inside the shell 22, an insulating sleeve film accommodating the electrode assembly 23 is provided in the accommodating cavity. An exhaust groove is provided toward the bottom of the accommodating cavity to form an exhaust channel; wherein an exhaust outlet communicating with the exhaust channel is provided at the bottom of the shell 22, and the explosion-proof valve is provided at the exhaust outlet.

The exhaust groove 253 is arranged toward the bottom of the shell 22 to form an exhaust channel, so that the gas generated when the electrode assembly 23 thermally runs away can enter the exhaust channel from the edge in any direction of the bottom support plate body 251 and discharge from the exhaust outlet 22a of the exhaust channel, thereby increasing the path for the gas to flow out when the electrode assembly 23 thermally runs away, so as to discharge the gas on any side when the electrode assembly 23 thermally runs away in time to avoid the occurrence of explosion.

According to an embodiment of the present application, as shown in FIG. 12, along the thickness direction of the bottom support plate body, the projection of the exhaust outlet 22a on the bottom support plate 25 is located within the exhaust groove 253.

The projection of the exhaust outlet 22a being located on the bottom support plate 25 means that the projection of the outline of the exhaust outlet 22a on the plane where the bottom support plate body 251 is located completely falls within the exhaust groove 253.

The shape of the exhaust outlet 22a may be, but is not limited to, a waist shape, an ellipse, a circle, a rectangle, a square, or the like.

Increasing the flow area of the gas passing through the exhaust outlet 22a can allow more quick discharge of the gas from the battery cell.

According to some embodiments of the present application, the ratio of the total thickness of the bottom support plate 25 to the height of the shell 22 ranges from 1:50 to 1:2000.

The total thickness of the bottom support plate 25 refers to the sum of thickness of the bottom support plate body 251 and the connecting plate 252 after being connected.

The bottom support plate 25 can be made thinner and the height of the shell 22 can be increased to improve the capacity of the battery cell.

As shown in FIGS. 4 to 6, 11 and 12, the battery cell 20 comprises an electrode assembly 23, an insulating sleeve film 24, a shell 22 and a bottom support plate 25. The insulating sleeve film 24 forms an accommodating space for accommodating the electrode assembly 23. The bottom support plate 25 comprises a bottom support plate body 251 and four connecting plates 252. The four connecting plates 252 are bonded to the lower surface of the bottom support plate body. The four connecting plates 252 form an exhaust groove 253 on the lower surface of the bottom support plate body 251. The exhaust groove 253 is in the shape of a cross groove. The exhaust groove 253 runs through the four edges of the bottom support plate body 251. The upper surface of the bottom support plate body 251 is bonded to the lower surface of the bottom of the insulating sleeve film 24. The bottom support plate 25 and the insulating sleeve film 24 are arranged in the shell 22, and the connecting plates 252 abut the upper surface of the bottom of the shell 22. The exhaust groove 253 and the upper surface of the bottom of the shell 22 form an exhaust channel. The bottom of the shell 22 is provided with an exhaust outlet 22a, which can be arranged at the center of the exhaust groove 253.

The width of the exhaust groove 253 at its narrowest position is greater than or equal to 20 mm.

The insulating sleeve film 24, the bottom support plate body 251 and the connecting plate 252 are all made of PP insulating material and are fixed together by bonding.

Finally, it should be noted that: the aforementioned embodiments are only used for illustrating the technical solution of the present application, rather than limiting it. Although the present application has been described in detail with reference to the foregoing embodiments, it should be understood by those of ordinary skills in the art that: it is still possible to modify the technical solutions recited in the foregoing embodiments, or to conduct equivalent replacements on some or all of the technical features; and these modifications and replacements would not make the nature of the corresponding technical solutions depart from the scope of the technical solutions of embodiments of the present invention, and should all be covered by the claims and description of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A bottom support plate for supporting an electrode assembly in a battery cell, the bottom support plate comprising:
a bottom support plate body; and
a connecting plate, wherein the connecting plate is arranged on a lower surface of the bottom support plate body, and an exhaust groove is formed between an edge of the connecting plate and the lower surface of the bottom support plate body, the exhaust groove runs through the peripheral edge of the bottom support plate body at least along a first direction and a second direction, the first direction and the second direction are both perpendicular to a thickness direction of the bottom support plate body, and the exhaust groove is configured to communicate with a gap between a shell and an insulating sleeve film of the battery cell.

2. The bottom support plate according to claim 1, wherein the number of the connecting plates is at least 1.

3. The bottom support plate according to claim 1 or 2, wherein there are four connecting plates, and the four connecting plates are arranged in a square matrix at intervals on the lower surface of the bottom support plate body.

4. The bottom support plate according to any one of claims 1 to 3, wherein the connecting plate and/or the bottom support plate body are insulating plastic plates.

5. The bottom support plate according to any one of claims 2 to 4, wherein the connecting plate is welded or bonded to the bottom support plate body.

6. The bottom support plate according to any one of claims 1 to 5, wherein the narrowest width of the exhaust groove ranges from 10 mm to 100 mm.

7. The bottom support plate according to any one of claims 1 to 6, wherein a through hole is provided on the bottom support plate body, and the through hole runs through an upper surface and the lower surface of the bottom support plate body along the thickness direction of the bottom support plate body.

8. A battery cell, comprising:
an insulating sleeve film, provided with an accommodating space for accommodating an electrode assembly of the battery cell;
the bottom support plate according to any one of claims 1 to 7, wherein the bottom support plate serves as the bottom wall of the insulating sleeve film, and/or the bottom of the insulating sleeve film is provided with the bottom support plate.

9. The battery cell according to claim 8, further comprising:
a shell, wherein an accommodating cavity is provided inside the shell, the insulating sleeve film accommodating the electrode assembly is provided in the accommodating cavity, and the exhaust groove is provided toward the bottom of the accommodating cavity to form an exhaust channel;
wherein an exhaust outlet communicating with the exhaust channel is provided at the bottom of the shell, and the exhaust outlet is provided with an explosion-proof valve.

10. The battery cell according to claim 9, wherein along the thickness direction of the bottom support plate body, the projection of the exhaust outlet on the bottom support plate is located within the exhaust groove.

11. The battery cell according to any one of claims 9 to 10, wherein the ratio of the total thickness of the bottom support plate to the height of the shell ranges from 1:50 to 1:2000.

12. A battery pack, comprising the battery cell according to any one of claims 8 to 11.

13. An electrical apparatus, comprising the battery cell according to any one of claims 8 to 11, the battery cell being configured to provide electric energy; or
comprising the battery pack according to claim 12, the battery pack being configured to provide electric energy.
